# EUROPÄISCHE PATENTSCHRIFT

(11) **EP 1 136 240 B1**
(45) Veröffentlichungstag und Bekanntmachung des Hinweises auf die Patenterteilung: **02.01.2003**
(21) Anmeldenummer: 00108834.3
(22) Anmeldetag: 26.04.2000
(51) Int. Cl.: B29C 71/04, B29C 59/16, E05B 65/20

(54) **Fahrzeugtüraussengriff und Verfahren zu seiner Herstellung**
Exterior handle for cars and method of manufacturing
Poignée extérieure pour véhicules et procédé pour sa fabrication

(30) Priorität: 23.03.2000 DE 10014171
(43) Veröffentlichungstag der Anmeldung: 26.09.2001
(73) Patentinhaber: BARLOG plastics GmbH, 51766 Engelskirchen (DE)
(72) Erfinder: Barlog, Werner, 51766 Engelskirchen (DE)
(74) Vertreter: Müller-Gerbes, Margot, Dipl.-Ing.

(56) Entgegenhaltungen:
- CH-A- 601 394
- DE-A- 19 635 948
- PATENT ABSTRACTS OF JAPAN vol. 1995, no. 04, 31. Mai 1995 (1995-05-31) & JP 07 024863 A (IDEMITSU PETROCHEM CO LTD), 27. Januar 1995 (1995-01-27)
- BIRKIGT WINFRIED: "Vernetzung von Thermoplasten im industriellen Masstab mittels Gammastrahlung" GUMMI FASERN KUNSTSTOFFE, Bd. 41, April 1988 (1988-04), Seiten 160-164, XP000003163 Stuttgart
- BARLINGEN K J VAN: "GAMMASTRALING" KUNSTSTOF EN RUBBER,NL,WYT EN ZONEN UITGEVERS. ROTTERDAM, Bd. 46, Nr. 6, 1. Juni 1993 (1993-06-01), Seiten 10-12, XP000377733 ISSN: 0167-9597

## Beschreibung

Gegenstand der Erfindung ist ein Fahrzeugtüraußengriff aus thermoplatischem Kunststoff und ein Verfahren zur Herstellung eines Fahrzeugtüraußengriffes aus thermoplastischem Kunststoff.

Türaußengriffe von Kraftfahrzeugen werden heute in großem Umfang aus thermoplastischen Kunststoffen, insbesondere Konstruktionswerkstoffen wie Polyamiden und thermoplastischem Polyester hergestellt. Die funktionellen Anforderungen werden durch die entsprechenden konstruktiven Maßnahmen erfüllt, d. h. einerseits anforderungsgerechte Konstruktion, andererseits durch das gewählte Material. Die Automobilunternehmen definieren die erforderlichen Öffnungskräfte in Verbindung mit dem aktuellen Fahrzeug-Konstruktionskonzept deutlich unterschiedlich. Bei Unfällen mit Brandfolgen ergibt sich die Problematik des Abschmelzens und/oder Abbrennens des thermoplastischen Werkstoffes des Türaußengriffes, so daß dann eine solche Fahrzeugtür nicht mehr öffenbar ist und möglicherweise Unfallopfer in Verbindung mit einem Brandfall nicht mehr rechtzeitig geborgen werden können.

Ein solcher Türaußengriff ist aus DE-A-196 35 948 bekannt.

Es ist die Aufgabe der vorliegenden Erfindung, die passive Sicherheit von Fahrzeuginsassen eines Kraftfahrzeuges darin zu erhöhen, daß ein vorzeitiges Abschmelzen und/oder Abbrennen der Türaußengriffe im Falle eines Unfalles mit Brandfolge deutlich verzögert und erschwert wird.

Erfindungsgemäß wird zur Lösung der gestellten Aufgabe ein Fahrzeugtüraußengriff vorgeschlagen, der aus thermoplastischem Kunststoff besteht und erhöhte Temperatur- und Formbeständigkeit aufweist, der erhalten ist aus einem durch energiereiche Strahlen vernetzbaren thermoplastischen Kunststoff ggf. enthaltend Additive und Füllstoff, der dreidimensional mittels energiereicher Strahlen -zumindest im Oberflächenbereich vernetzt ist.

Das erfindungsgemäße Verfahren zur Herstellung eines Fahrzeugtüraußengriffes aus thermoplastischem Kunststoff mit erhöhter Temperaturbeständigkeit und Formbeständigkeit zeichnet sich dadurch aus, daß aus durch energiereiche Strahlung vernetzbaren thermoplastischen Kunststoffen ggf. enthaltend Additive und Füllstoffe durch Formgebung erhaltene Griffe nach der Formgebung zumindest an der Oberfläche mittels energiereicher Strahlung vernetzt werden und in einen duroplastähnlichen Zustand gebracht werden. Die erfindungsgemäßen Fahrzeugtüraußengriffe, deren Herstellung durch den Folgeschritt der Strahlenvernetzung des thermoplastischen Griffes ergänzt wird, erhalten dadurch eine wesentlich höhere Formbeständigkeit des Griffes über den Schmelzpunkt des ursprünglich verwendeten Werkstoffes hinaus und können dadurch kurzzeitig hohen Temperaturen widerstehen, so daß ein Abschmelzen des Griffes behindert wird und der Griff erhalten bleibt. Damit ist das Öffnen von Fahrzeugtüren von außen über den noch vorhandenen Türaußengriff nach einem Brand durch Rettungskräfte sichergestellt.

Überraschend gelingt es, durch Strahlenvernetzung des Türaußengriffes aus thermoplastischem Kunststoff ein vorzeitiges Abschmelzen und/oder Abbrennen und Abschmelzen des Türaußengriffes deutlich zu verzögern. Durch die Strahlenvernetzung gelingt es, die Formbeständigkeit des Türaußengriffes über den Schmelzpunkt des ursprünglich verwendeten Kunststoffes hinaus zu erhalten.

Als Formgebungsverfahren für den Türaußengriff wird das Spritzgießverfahren oder das Spritzgießen in Verbindung mit Gasinnendrucktechniken vorgeschlagen. Es ist bevorzugt, daß der gesamte Türaußengriff vernetzt wird. Hierfür wird bevorzugt eine Strahlenvernetzung mit γ-Strahlen einer Dosis > 100 kGy eingesetzt.

Erfindungsgemäß wird vorgeschlagen, einen Vernetzungsgrad des Türaußengriffes aus thermoplastischem Kunststoff von mindestens 50 % zu erreichen.

Die Erfindung ist den kennzeichnenden Merkmalen der Ansprüche entnehmbar.

Erfindungsgemäß ist es möglich, für Türaußengriffe aus mittels energiereichen Strahlen vernetzbaren thermoplastischen Kunststoffen ohne Vernetzunghilfsmittel, die durch Spritzgießen hergestellt werden, mittels unmittelbar nachfolgender Strahlenvernetzung mittels γ-Strahlen einen Vernetzungsgrad von über 50 % zu erreichen. Hierdurch wird das thermoplastische Gefüge in einen duroplastähnlichen Zustand gebracht und die Formbeständigkeit des Türgriffes und seine Temperaturbeständigkeit wesentlich erhöht.

Eine weitere Steigerung des Vernetzungsgrades ist durch Zusatz von Vernetzungsbeschleunigeradditiven (Vernetzungshilfsmitteln) wie Trimethylpropantrimethacrylat,. Diallylphthalat, Allylmethacrylat, Triallyl-iso-cyanurat in geringen Mengen bis zu 2 Gew.-% bezogen auf den thermoplastischen Kunststoff möglich, insbesondere sind hiermit Vernetzungsgrade über 60 % bei Bestrahlung mittels γ-Strahlen des gesamten Türaußengriffes möglich.

Dem thermoplastischen Kunststoff für den Griff können auch geeignete inerte Füllstoffe zugegeben werden, beispielsweise Calciumcarbonat, Microsilika oder andere mineralische Substanzen und/oder Faserverstärkungen, wie Glasfasern, kurz oder lang, und/oder Carbonfasern. Ebenso können Stabilisatoren und Farbmittel zugegeben werden.

Darüber hinaus ist es möglich, die Griffe entweder aus selbstverlöschenden thermoplastischen Kunststoffen oder mittels Flammschutzadditiven selbstverlöschend oder schwer entflammbar ausgerüsteten thermoplastischen Kunststoffen herzustellen, die ebenfalls nachfolgend nach der Formgebung mit oder ohne Vernetzungsbeschleunigeradditiven mittels γ-Strahlen vernetzt werden.

Die erfindungsgemäßen Fahrzeugtüraußengriffe zeichnen sich durch eine dichte geschlossenporige Außenhaut infolge der Vernetzung aus.

Die Elektronenstrahlvernetzung mit hoher Energie führt an der Oberfläche des Griffes möglicherweise zu einer chemischen Veränderung, ggf. einer Oxidation, die sich hier als Vorteil erweisen kann. Die Oberflächenoxidation kann sich positiv auf die Lackierfähigkeit oder Verchrombarkeit des vernetzten Griffes auswirken.

Nach einem weiteren Vorschlag der Erfindung werden Türgriffe mit einem geschäumten Kern und geschlossener Außenhaut hergestellt, indem dem thermoplastischen Kunststoff vor oder während des Formgebungsverfahrens chemische oder physikalische Treibmittel zugegeben werden.

Bei Anwendung von Gasinnendrucktechniken wird der Griff beim Spritzgießen im Kern hohlgeblasen.

Erfindungsgemäß können auch Türaußengriffe aus einer Werkstoffpaarung, nämlich einer funktionellen Kunststoffkomponente und einer äußeren dekorativen Kunststoffkomponente im 2-Komponenten-Spritzgießverfahren oder im Sandwichaufbau hergestellt werden, wobei erfindungsgemäß zumindest die äußere dekorative Schicht aus einem durch energiereiche Strahlen vernetzbaren Kunststoff besteht und vernetzt wird.

Bevorzugt bestehen jedoch sowohl die funktionelle als auch die dekorative Kunststoffkomponente aus einem durch energiereiche Strahlen vernetzbaren Kunststoff, um einen durchgängig oder nahezu durchgängig mittels energiereicher Strahlen vernetzten Türaußengriff zu erhalten.

Erfindungsgemäß werden Fahrzeugtüraußengriffe erhalten, die einen Vernetzungsgrad von mindestens 50 % aufweisen und die wunschgemäß durchgängig vernetzt sind. Die erfindungsgemäßen Fahrzeugtüraußengriffe können selbstverlöschend bzw. schwer entflammbar ausgerüstet sein. Die erfindungsgemäßen Fahrzeugtüraußengriffe können einen geschäumten inneren Kernbereich aufweisen und sie können auch im Inneren einen Kernhohlraum aufweisen. Die Fahrzeugtüraußengriffe können faserverstärkt ausgebildet sein, wobei bis zu 60 Gew.-% Fasern, insbesondere Glasfasern in dem Griff enthalten sein können. Die Fahrzeugtüraußengriffe können nach ihrer Herstellung und Strahlenvernetzung lackiert oder verchromt werden.

Die Fahrzeugtüraußengriffe können aus durch energiereiche Strahlen vernetzbaren Kunststoffen, wie Polyolefinen, wie Polyethylen (LDPE, HDPE, LLDPE, VLDPE) und Polypropylen sowie deren Co- und Terpolymeren, Polyvinylacetat, thermoplastischen Polyestern, Polystyrol, Styrol-Butadien, Acrylnitril-Butadien-Styrol-Copolymerisaten, Polyamid und Polyamidblends, Polycarbonat und Polycarbonatblends, Polyurethan, Polyvinylidenchlorid, sowie Copolymeren der vorgenannten Kunststoffe einzeln oder in Mischungen eingesetzt werden.

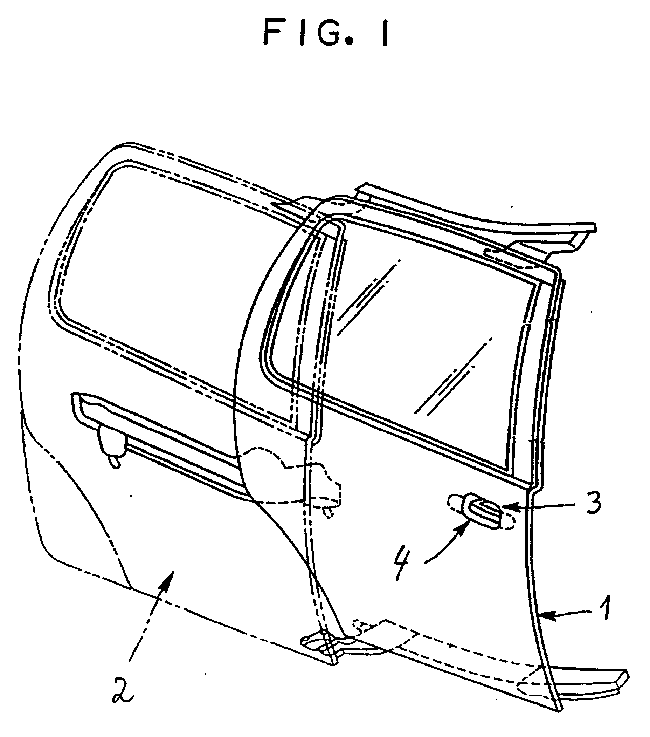

In der Zeichnung ist beispielhaft in der Figur 1 auszugsweise die Seite 2 eines Kraftfahrzeuges mit einer Schiebetür 1 dargestellt, wobei der Türaußengriff 3 in einer Nische 4 der Tür 1 untergebracht ist. Die Karosserie 2 und die Tür 1 sind aus Stahlblech hergestellt und somit im Brandfall widerstandsfähig, der Türaußengriff 3 in erfindungsgemäßer Ausstattung aus einem durch energiereiche γ-Strahlen zu 50 % vernetzten Polyamid ist kurzzeitig auch hohen Temperaturen gegenüber widerstandsfähig und verhindert ein zu schnelles Abschmelzen und Abbrennen im Brandfall. Bei Unfällen mit Brandfolgen wird die Wahrscheinlichkeit, daß der Türaußengriff einen kurzzeitigen Brand übersteht, erhöht, so daß die Türen mittels des Türaußengriffes eines Unfallfahrzeuges nach dem Brand noch geöffnet werden können.

Überraschend hat sich herausgestellt, daß im Falle eines Brandes bei Einwirkung großer Hitze ein unvernetzter Türaußengriff in wenigen Minuten abschmilzt und nach Löschung des Brandes kein Griff mehr vorhanden ist, also auch die Fahrzeugtür nicht ohne weiteres von außen zu öffnen ist. Der erfindungsgemäße mit energiereichen Strahlen zumindestens 50 % vernetzte Griff aus dem gleichen Werkstoff hingegen bleibt als Gerüst auch unter längerer Einwirkung von Brandhitze erhalten, so daß nur die nicht vernetzten Anteile des Thermoplasten abschmelzen und nach Löschung des Brandes noch ein anfaßbarer Griff an der Fahrzeugtür vorhanden ist.

Die Erfindung wird anhand eines Ausführungsbeispieles und Brandversuch nachfolgend erläutert.

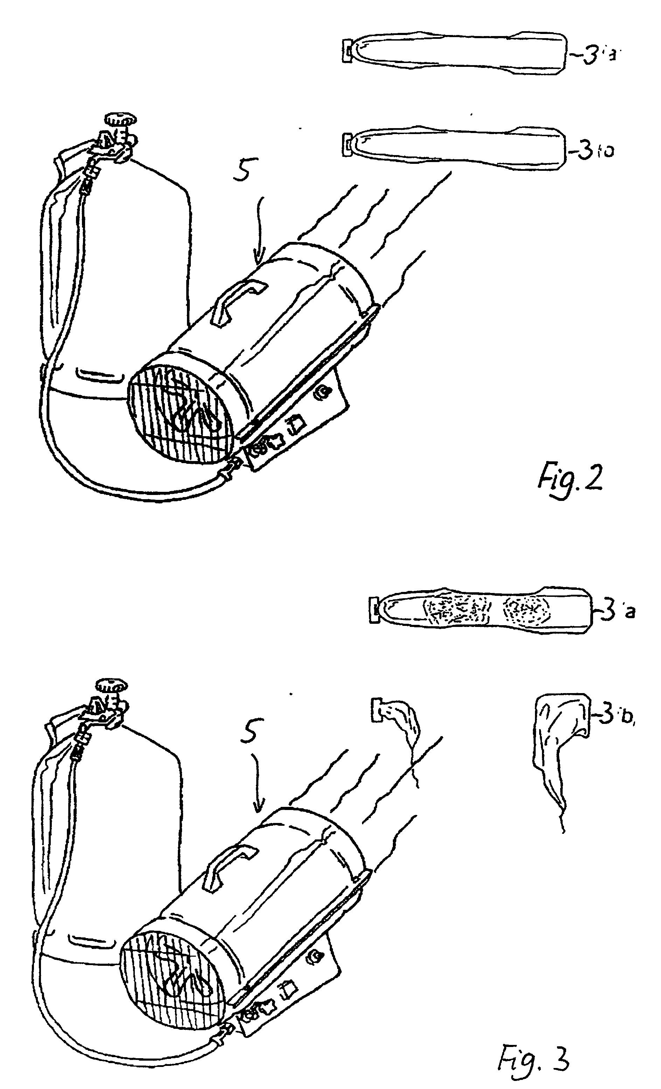

Für den Versuch wurden ein erfindungsgemäßer Griff 3a, gefertigt aus PA 66 30 % glasfaserverstärkt, 55 % strahlenvernetzt und ein Vergleichsgriff 3b, gefertigt aus PA 66 30 % glasfaserverstärkt, konventionell nicht vernetzt, eingesetzt. Im Prüfaufbau sind die Griffe 3a und 3b, siehe Figur 2, übereinander montiert und werden mit gasbetriebenem Heißluftbrenner 5 gleichmäßig und gleichzeitig erhitzt. Das kontinuierliche und gleichmäßige Aufheizen wird berührungslos per Infrarotthermometer überwacht.

Nach 8 min wird eine Oberflächentemperatur von 270°C an beiden Griffen erreicht. Griff 3a zeigt sich völlig unverändert. Griff 3b beginnt sich zu deformieren und wird nur noch von der nicht direkt erreichten Rückseite des Bauteiles getragen.

Nach 10 min schmilzt Griff 3b ab. Nach 11 min ist für Griff 3b die Situation, wie in Figur 3 dargestellt, erreicht, während sich Griff 3a unverändert unter Formerhalt zeigt, bei einer inzwischen erreichten Oberflächentemperatur von 280°C, siehe Figur 3.

Nach 17 min erreicht die Oberflächentemperatur von Griff 3a 365°C. Die Oberfläche verändert sich leicht. Bläschenbildung nach 18 min bei Erreichen von 380°C Oberflächentemperatur. Nach 19 min erreicht Griff 3a eine Oberflächentemperatur von 405°C, wobei die Form noch besteht.

Danach wird der Heißluftbrenner abgestellt. Nach dem Abkühlen hat Griff 3a noch die Originalkontur - Form - mit Bläschenbildung an der Oberfläche und ist voll funktionsfähig. Der eingesetzte vernetzbare Kunststoff, PA 66, hat einen Schmelzpunkt von 260°C. Durch die Vernetzung mittels energiereicher γ-Strahlen einer Dosis > 100 kGy wurde die gewünschte Formbeständigkeit für den Brandfall erreicht.

## Patentansprüche

1. Verfahren zum Herstellen eines Fahrzeugtüraußengriffes aus thermoplastischem Kunststoff mit erhöhter Temperaturbeständigkeit und Formbeständigkeit, **dadurch gekennzeichnet, daß** aus durch energiereiche Strahlung vernetzbaren thermoplastischen Kunststoffen gegebenenfalls enthaltend Additive und Füllstoffe durch Formgebung erhaltene Griffe nach der Formgebung zumindest an der Oberfläche mittels energiereicher Strahlung vernetzt werden und in einen duroplastähnlichen Zustand gebracht werden.

2. Verfahren nach Anspruch 1, **dadurch gekennzeichnet, daß** für die Vernetzung γ-Strahlen eingesetzt werden.

3. Verfahren nach Anspruch 1 oder 2, **dadurch gekennzeichnet, daß** zur Formgebung der Griffe das Spritzgießverfahren angewendet wird.

4. Verfahren nach einem der Ansprüche 1 oder 2, **dadurch gekennzeichnet, daß** zur Formgebung der Griffe das Spritzgießen in Verbindung mit Gasinnendrucktechnik angewandt wird, um Griffe mit hohlem Kern zu erhalten.

5. Verfahren nach einem der Ansprüche 1 bis 4, **dadurch gekennzeichnet, daß** dem thermoplastischen Kunststoff vor oder während des Formgebungsverfahrens Vernetzungsbeschleunigeradditiv zugegeben wird.

6. Verfahren nach einem der Ansprüche 1 bis 5, **dadurch gekennzeichnet, daß** dem thermoplastischen Kunststoff vor oder während des Formgebungsverfahrens chemische oder physikalische Treibmittel zugegeben werden, um Griffe mit geschäumten Kern und geschlossener Außenhaut zu erhalten.

7. Verfahren nach einem der Ansprüche 1 bis 6, **dadurch gekennzeichnet, daß** dem thermoplastischen Kunststoff Flammschutzadditive zwecks selbstverlöschender oder schwerentflammbarer Ausrüstung der Griffe zugegeben werden.

8. Verfahren nach einem der Ansprüche 1 bis 7, **dadurch gekennzeichnet, daß** aus einer Werkstoffpaarung, einer funktionellen und einer dekorativen Kunststoffkomponente, im 2-Komponenten-Spritzgießverfahren ein Griff geformt wird.

9. Verfahren nach einem der Ansprüche 1 bis 7, **dadurch gekennzeichnet, daß** aus einer Werkstoffpaarung, einer funktionellen und einer dekorativen Kunststoffkomponente, im Sandwichaufbau ein Griff geformt wird.

10. Verfahren nach einem der Ansprüche 1 bis 9, **dadurch gekennzeichnet, daß** der Griff in seiner Gesamtheit mit einem Vernetzungsgrad von mindestens 50 % vernetzt wird.

11. Fahrzeugtüraußengriff aus thermoplastischem Kunststoff mit erhöhter Temperatur und Formbeständigkeit aus einem durch energiereiche Strahlen vernetzbaren thermoplastischen Kunststoff gegebenenfalls enthalten Additive und Füllstoff, der dreidimensional mittels energiereicher Strahlen zumindest im Oberflächenbereich vernetzt ist.

12. Fahrzeugtüraußengriff nach Anspruch 11, **dadurch gekennzeichnet, daß** er einen Vernetzungsgrad von mindestens 50 % aufweist.

13. Fahrzeugtüraußengriff nach Anspruch 11 oder 12, **dadurch gekennzeichnet, daß** er durchgängig vernetzt ist.

14. Fahrzeugtüraußengriff nach einem der Ansprüche 11 bis 13, **dadurch gekennzeichnet, daß** er mittels γ-Strahlen vernetzt ist.

15. Fahrzeugtüraußengriff nach einem der Ansprüche 11 bis 14, **dadurch gekennzeichnet, daß** er selbstverlöschend bzw. schwer entflammbar ausgerüstet ist.

16. Fahrzeugtüraußengriff nach einem der Ansprüche 11 bis 15, **dadurch gekennzeichnet, daß** er im Inneren geschäumt ist und eine geschlossene Außenhaut aufweist.

17. Fahrzeugtüraußengriff nach einem der Ansprüche 11 bis 16, **dadurch gekennzeichnet, daß** er aus zwei Kunststoffkomponenten aufgebaut ist.

18. Fahrzeugtüraußengriff nach einem der Ansprüche 11 bis 17, **dadurch gekennzeichnet, daß** er einen hohlen Kern aufweist.

19. Fahrzeugtüraußengriff nach einem der Ansprüche 11 bis 18, **dadurch gekennzeichnet, daß** als durch energiereiche Strahlen vernetzbare thermoplastische Kunststoff, Polyolefine, wie Polyethylen und Polypropylen sowie deren Co- und Terpolymere, Polyvinylacetat, thermoplastischer Polyester, Polystyrol, ABS sowie Copolymere der vorgenannten Kunststoffe, Polycarbonate und Polycarbonatblends, Polyurethan, Polyamide und Polyamidblends, Polyvinyldenchlorid und deren Copolymere einzeln oder in Mischungen eingesetzt sind.

20. Fahrzeugtüraußengriff nach einem der Ansprüche 11 bis 19, **dadurch gekennzeichnet, daß** er bis zu 60 Gew.-% Glasfasern enthält.

## Claims

1. A method for manufacturing a vehicle door outside handle of thermoplastic material with increased resistance to temperature and dimensional stability, **characterised in that** handles produced from thermoplastic materials cross-linkable via energy-rich radiation optionally containing additives and filler materials by moulding are cross-linked after moulding at least on the surface by means of energy-rich radiation and are brought to a duroplastic-like state.

2. The method as claimed in Claim 1, **characterised in that** gamma rays are used for cross-linking.

3. The method as claimed in Claim 1 or 2, **characterised in that** injection moulding is used to mould the handles.

4. The method as claimed in any one of Claims 1 or 2, **characterised in that** for moulding the handles injection moulding is applied in conjunction with internal gas pressure technology to produce handles with a hollow core.

5. The method as claimed in any one of Claims 1 to 4, **characterised in that** a cross-linking accelerator additive is added to the thermoplastic material before or during the moulding procedure.

6. The method as claimed in any one of Claims 1 to 5, **characterised in that** chemical or physical propellants are added to the thermoplastic material before or during the moulding procedure to produce handles with a foamed core and a closed outer skin.

7. The method as claimed in any one of Claims 1 to 6, **characterised in that** flame-retardant additives are added to the thermoplastic material for the purpose of rendering the handles self-extinguishing or highly inflammable.

8. The method as claimed in any one of Claims 1 to 7, **characterised in that** a handle is moulded from a material pairing, a functional and a decorative material component, in a 2-step injection moulding process.

9. The method as claimed in any one of Claims 1 to 7, **characterised in that** a handle is moulded from a material pairing, a functional and a decorative material component, in a sandwich construction.

10. The method as claimed in any one of Claims 1 to 9, **characterised in that** the handle is cross-linked in its entirety with a degree of cross-linking of at least 50 %.

11. The vehicle door outside handle made of thermoplastic material with increased temperature and dimensional stability from a thermoplastic material cross-linkable via energy-rich beams optionally containing additives and filler material, which is cross-linked three-dimensionally by means of energy-rich beams at least in the surface region.

12. The vehicle door outside handle as claimed in Claim 11, **characterised in that** it has a degree of cross-linking of at least 50 %.

13. The vehicle door outside handle as claimed in Claim 11 or 12, **characterised in that** it is cross-linked permeably.

14. The vehicle door outside handle as claimed in any one of Claims 11 to 13, **characterised in that** it is cross-linked by means of gamma rays.

15. The vehicle door outside handle as claimed in any one of Claims 11 to 14, **characterised in that** it is rendered self-extinguishing or highly inflammable.

16. The vehicle door outside handle as claimed in any one of Claims 11 to 15, **characterised in that** it is foamed in its interior and has a closed outer skin.

17. The vehicle door outside handle as claimed in any one of Claims 11 to 16, **characterised in that** it is constructed of two plastics material components.

18. The vehicle door outside handle as claimed in any one of Claims 11 to 17, **characterised in that** it has a hollow core.

19. The vehicle door outside handle as claimed in any one of Claims 11 to 18, **characterised in that** polyolefins, such as polyethylene and polypropylene as well as their copolymers and terpolymers, polyvinyl acetate, thermoplastic polyester, polystyrol, ABS and copolymers of the abovementioned materials, polycarbonates and polycarbonate blends, polyurethane, polyamides and polyamide blends, polyvinyldene chloride and their copolymers are used individually or in mixtures as thermoplastic material cross-linkable by energy-rich beams.

20. The vehicle door outside handle as claimed in any one of Claims 11 to 19, **characterised in that** it contains up to 60 % by weight of glass fibres.

## Revendications

1. Procédé pour fabriquer une porte extérieure de véhicule en plastique thermoplastique avec une résistance élevée à la température et à la déformation, **caractérisé en ce que** des poignées obtenues par façonnage à partir de plastiques thermoplastiques réticulables par un rayonnement riche en énergie et contenant éventuellement des additifs et des matières de charge sont réticulées après le façonnage au moins sur la surface au moyen d'un rayonnement riche en énergie et sont amenées dans un état identique au duroplaste.

2. Procédé selon la revendication 1, **caractérisé en ce que** l'on utilise des rayons γ pour la réticulation.

3. Procédé selon la revendication 1 ou 2, **caractérisé en ce que** le procédé de moulage par injection est utilisé pour le façonnage des poignées.

4. Procédé selon l'une quelconque des revendications 1 ou 2, **caractérisé en ce que** le moulage par injection est utilisé en liaison avec la technique de pression interne des gaz pour le façonnage des poignées, afin d'obtenir des poignées avec un noyau creux.

5. Procédé selon l'une quelconque des revendications 1 à 4, **caractérisé en ce qu'**un aditif d'accélérateur de réticulation est ajouté au plastique thermoplastique avant ou pendant le procédé de façonnage.

6. Procédé selon l'une quelconque des revendications 1 à 5, **caractérisé en ce que** des agents moussants chimiques ou physiques sont ajoutés au plastique thermoplastique avant ou pendant le procédé de façonnage afin d'obtenir des poignées avec un noyau moussé et une enveloppe extérieur fermée.

7. Procédé selon l'une quelconque des revendications 1 à 6, **caractérisé en ce que** des aditifs ignifuges sont ajoutés au plastique thermoplastique pour un équipement auto-extincteur ou peu inflammable des poignées.

8. Procédé selon l'une quelconque des revendications 1 à 7, **caractérisé en ce qu'**une poignée est formée à partir d'un appariement de matériau, un composant plastique fonctionnel et un composant plastique décoratif, dans un procédé de moulage par injection à deux composants.

9. Procédé selon l'une quelconque des revendications 1 à 7, **caractérisé en ce qu'**une poignée est formée dans une structure sandwich à partir d'un appariement de matériau, un composant plastique fonctionnel et un composant plastique décoratif.

10. Procédé selon l'une quelconque des revendications 1 à 9, **caractérisé en ce que** la poignée est réticulée dans sa globalité avec un taux de réticulation d'au moins 50 %.

11. Poignée extérieure de porte de véhicule à base de plastique thermoplastique avec une grande résistance à la chaleur et à la déformation à base d'un plastique thermoplastique réticulable par rayonnement riche en énergie et contenant éventuellement des aditifs et une matière de charge qui est réticulé en trois dimensions au moyen de rayonnements riches en énergie au moins dans la zone superficielle.

12. Poignée extérieure de porte de véhicule selon la revendication 11, **caractérisée en ce qu'**elle présente un taux de réticulation d'au moins 50 %.

13. Poignée extérieure de porte de véhicule selon la revendication 11 ou 12, **caractérisée en ce qu'**elle est réticulée de façon continue.

14. Poignée extérieure de porte de véhicule selon l'une quelconque des revendications 11 à 13, **caractérisée en ce qu'**elle est réticulée au moyen de rayons γ.

15. Poignée extérieure de porte de véhicule selon l'une quelconque des revendications 11 à 14, **caractérisée en ce qu'**elle est auto-extinctrice et peu inflammable.

16. Poignée extérieure de porte de véhicule selon l'une quelconque des revendications 11 à 15, **caractérisée en ce qu'**elle est moussée à l'intérieur et présente une enveloppe extérieure fermée.

17. Poignée extérieure de porte de véhicule selon l'une quelconque des revendications 11 à 16, **caractérisée en ce qu'**elle est conçue à base de deux composants plastique.

18. Poignée extérieure de porte de véhicule selon l'une quelconque des revendications 11 à 17, **caractérisée en ce qu'**elle présente un noyau creux.

19. Poignée extérieure de porte de véhicule selon l'une quelconque des revendications 11 à 18, **caractérisée en ce qu'**on utilise individuellement ou dans des mélanges comme plastiques thermoplastiques pouvant être réticulés par des rayons riches en énergie des polyoléfines, comme du polyéthylène et de polypropylène ainsi que leurs copolymères et terpolymères, du polyacétate de vinyle, du polyester thermoplastique, du polystyrène, de l'ABS ainsi que des copolymères des plastiques susmentionnés, des polycarbonates et des mélanges de polycarbonate, du polyuréthane, des polyamides et des mélanges de polyamide, du chlorure de polyvinylidène et leurs copolymères.

20. Poignée extérieure de porte de véhicule selon l'une quelconque des revendications 11 à 19, **caractérisée en ce qu'**elle présente jusqu'à 60 % en poids de fibres de verre.
